Europäisches Patentamt

European Patent Office

Office européen des brevets

(11) Veröffentlichungsnummer: **0 276 404 B1**

# EUROPÄISCHE PATENTSCHRIFT

(45) Veröffentlichungstag der Patentschrift: **03.06.92**

(51) Int. Cl.⁵: **B23K 9/04**, F01D 5/00

(21) Anmeldenummer: **87117449.6**

(22) Anmeldetag: **26.11.87**

(54) Verfahren zur Verlängerung des Schaufelblattes von Strömungsmaschinenschaufeln.

(30) Priorität: **12.12.86 CH 4952/86**

(43) Veröffentlichungstag der Anmeldung:
**03.08.88 Patentblatt 88/31**

(45) Bekanntmachung des Hinweises auf die
Patenterteilung:
**03.06.92 Patentblatt 92/23**

(84) Benannte Vertragsstaaten:
**CH DE FR GB LI NL SE**

(56) Entgegenhaltungen:
**DE-A- 2 054 549**
**FR-A- 2 397 259**

(73) Patentinhaber: **BBC Brown Boveri AG**
**Haselstrasse**
**CH-5401 Baden(CH)**

(72) Erfinder: **Koromzay, Tibor**
**Lindenhof 24**
**CH-5430 Wettingen(CH)**

Rank Xerox (UK) Business Services

## Beschreibung

Die Erfindung bezieht sich auf eine Lehre zur Instandstellung von defekten Schaufelblättern von Strömungsmaschinenschaufeln, welche während des Betriebes aus irgendeinem Grund Defekte erleiden. Insbesondere betrifft die Erfindung ein Verfahren - und eine Vorrichtung zur Durchführung dieses Verfahrens -zur Verlängerung und/oder Reparatur (Ausbesserung), z.B. Ecken an Ein- und Austrittskanten des Schaufelblattes von Strömungsmaschinenschaufeln durch Auftragsschweissen.

## Stand der Technik

Bei Strömungsmaschinen, beispielsweise Turbomaschinen, bergen defekte Schaufeln ein grosses Gefahrenpotential für die ganze Anlage in sich. Heikles Teil jeder Schaufel ist unbestrittenerweise das Schaufelblatt, insbesondere wenn es sich um Expansions- oder Niederdruckturbinen handelt, bei welchen verhältnismässig schlanke Schaufelblätter anzutreffen sind.

Durch Schwingungen der Schaufeln oder durch auftretende Umwucht sowie durch eingelaufene nicht zentrische Lagestellung des Rotors kommt es bei angestrebter Minimierung des Luftspaltes zwischen Schaufelblattende und Stator unweigerlich zu einer Verletzung der Schaufelblätter. Selten sind die Fälle, in denen aufgrund eines solchen Defektes sich die Auswechslung der ganzen Schaufel aufdrängt. In den allermeisten Fällen erleiden die Schaufelblätter durch Abrieb in heisser Umgebung eine Längenabnützung oder Stauchung, wobei es dann wegen Laufexentrizität des Rotors zu einer einseitigen lagebedingten Vergrösserung des Spaltes zwischen Schaufelblattende und Stator kommt. Solche Spaltvergrösserungen mindern den Wirkungsgrad der Anlage und stören den Strömungsfluss des Mediums, dergestalt, dass dadurch die Laufeigenschaften der Strömungsmaschine zu einem unstabilen Zustand abdriften können. Insbesondere dann, wenn die Abnützung des Schaufelblattes fortschreitet, kann dies zu einem dynamisch sich verschlechternden irreversiblen Zustand führen.

Im üblichen handwerklichen Betrieb wird die Reparatur der Schaufel dergestalt eingeleitet, dass sie ausgebaut wird, das die Schaufel oder das Schaufelblattende eventuell metallurgisch vorpräpariert und anschliessend durch Auftragsschweissungen wieder auf die ursprüngliche Länge gebracht, welche ausgehend vom neu auf Rundlauf gerichteten Rotor den optimalen Luftspalt zwischen Schaufelblattende und Stator wieder erstellt. Ein solches Vorgehen führt auch zum Ziel, nur ist der Aufwand hierzu recht gross. Darüber hinaus kann es bei der Wiederbestückung des Rotors mit den Schaufeln zu Einsetzungsfehlern einzelner Schaufeln kommen, was immer wieder - wie aus der Praxis bekannt ist - Nachverbesserungen vonnöten macht. So gesehen ist es naheliegend, dass eine Längenanpassung und/oder kleinere Reparaturen der Schaufelenden der Schaufelblätter im montierten Zustand anzustreben ist, d.h., nach Rundlaufrichtung des Rotors wird die Minimierung der Luftspalte resp. Schaufelspiele zwischen Schaufelblattende und Stator wieder erstellt. Allein diese vom Aufwand her an sich vorteilhafte Technik bringt einige gewichtige Nachteile mit sich: Da ist einmal der mögliche lange über den Rotor führende Stromzufuhrweg des Schweissstromkreises zu nennen. Aus elektrotechnischen Gründen ist es vorteilhaft, wenn beim Schweissen der Stromkreis möglichst kurz ist und der Ort der Stromzufuhr nahe der Schweissstelle liegt. Beim direkten Anbringen einer Klemme an das Schaufelblatt, kann dieses mechanisch, oder durch einen überspringenden Funken beschädigt werden. Solche Kerben, hauptsächlich die, die durch elektrische Einbrände entstehen, setzen die Wechselfestigkeit der Schaufeln stark herab.

Bei warmrissanfälligen Werkstoffen, z.B. Nikkellegierungen, kann die Rissanfälligkeit durch geringe Wärmezufuhr und Erwärmung der Schweisszone herabgesetzt werden. Mit anderen Worten, eie rasche Abführung der Wärme von der Schweissstelle, wirkt sich positiv aus.

Diese anzustrebende rasche Abkühlung der Schaufeln nach dem Schweissvorgang ist ohne zusätzliche aufwendige Hilfsmassnahme ungenügend gewährleistet. Eine unprofessionelle, behelfsmässige Abkühlung der Schaufeln führt, wie die Erfahrung lehrt, nicht zu dem gewünschten Erfolg. Demgegenüber gilt das Gesagte, allerdings mit umgekehrten Vorzeichen, bei Schaufelmaterialien, die beim Schweissen ein Vorwärmen und anschliessend gleichmässige Temperaturgradienten bedingen. Hier ist es ohne zusätzliche Vorkehrungen, die wiederum aufwendig und die materiell nicht immer verfügbar sind, insbesondere wenn die Reparatur vor Aufstellungsort der Anlage vorgenommen werden muss, gar nicht möglich, eine qualitativ hochstehende Auftragsschweissung durchzuführen. Hinsichtlich Qualität der Schweissung kommt man bei empfindlichen Schaufelwerkstoffen ohne zusätzliche Zuführung von inertem Gas (Schutzgas) in die Schweisspartie der Schaufel nicht mehr aus. Will man aber eine solche Schutzmassnahme zusätzlich vorsehen, so bedingt dies, dass weitergehende, zielgerichtete Vorkehrungen in die Wege geleitet werden, welche den Aufwand wiederum nicht unbeträchtlich erhöhen.

In der Druckschrift FR-A1-2 397 259 wird ein Auftragsschweissverfahren beschrieben, das sich auch zur Behandlung von Schaufeln im Turbinenbau eignet. Stossrichtung des beschriebenen Verfahrens ist es indessen, chemische Zusammensetzungen für die am Schaufelblattende aufzutragen Schweissraupen vorzuschlagen. Dabei geht die Lehre aus dieser Druckschrift davon aus, dass die Schaufeln jeweils lose vorliegen, also zur Behandlung auszubauen sind, damit sie in einer Spezialwerkstatt erneuert werden können. Allein unter diesem Aspekt betrachtet, zeigt es sich, dass ein solches Vorgehen sehr teuer ist, denn die Schaufeln müssen jeweils nicht nur ausgebaut werden, sondern auch wieder eingebaut werden, was vielfach gar nicht möglich ist, denn die dafür erforderliche Infrastruktur ist vor Ort gar nicht vorhanden. Abgesehen davon, dass die Stillstandzeiten solcher Anlagen beträchtliche wirtschaftliche Verluste mit sich brächten. Es wird des weiteren hingewiesen, dass die Einsetzung der Schaufel eine heikle Operation ist, welche auch einen grossen personellen Aufwand nötig macht. Dabei darf nicht verkannt werden, dass es von der Qualitätssicherung her betrachtet sehr wohl ein Unterschied ist, ob die Schaufeln im eingebauten oder im losen Zustand, wie dies in FR-A1-2 397 259 der Fall ist, im Sinne einer Auftragsschweissung erneuert werden.

Darstellung der Erfindung

Die Erfindung, wie sie in den Ansprüchen gekennzeichnet ist, löst die Aufgabe, ein Verfahren zur Verlängerung des Schaufelblattes und/oder Reparatur der Schaufelenden von Strömungsmaschinenschaufeln durch Auftragsschweissungen im eingebauten Zustand anzugeben, bei welchem der Aufwand dazu minimiert und die Qualitätssicherung der Schweissung grösstmöglichst erhöht wird.

Die Vorteile des erfindungsgemässen Verfahrens sind im wesentlichen darin zu sehen, dass die Schaufelblätter im eingebauten Zustand und auch vor Aufstellungsort der Anlage mit Auftragsschweissung beliebig verlängert werden können, wobei das hier angewendete Schweissverfahren Massnahmen miteinschliesst, welche eine fortgeschrittene Schweissung ermöglichen.

Eine integrierende Massnahme des erfindungsgemässen Verfahrens bildet die Form aus Metall. Weitere vorteilhafte Ausgestaltungen der Form sowie des Schweissverfahrens, wie aus den abhängigen Ansprüchen hervorgeht, lassen die gesteckte Aufgabe erzielen. Die Form selbst, welche vorzugsweise zweiteilig konzipiert ist, weist eine innenseitige durchgehende Oeffnung von der Form des Profils des Schaufelblattes auf. Sie wird auch im Bereich des Schaufelblattendes eingesetzt, dergestalt, dass sie die Profilform des Schaufelblattes manchettenartig umschliesst und ummantelt. Hierdurch ist es leicht, der eine Pol des Schweissstromkreises direkt an die Form anzubringen, wodurch die Stromwege minimal verkürzt werden können. Auch bietet eine solche Form die Möglichkeit, Erwärmungs- und Kühlungsdispositive vorzusehen: Beschleunigung der Abkühlung bei warmrissanfälligen Werkstoffen, beispielsweise Nickellegierungen. Bei Werkstoffen, die ein Vorwärmen beim Schweissen erfordern, ist durch Zufuhr von Wärme in die Form eine gleichmässige Erwärmung erreichbar. Durch ein Erwärmen der Form auf höhere Temperaturen ist ein Anlassen oder kurzfristiges Spannungsarmglühen, beispielsweise bei ferritisch-martensitischen Werkstoffen, möglich.

Selbstredend lässt sich auch durch entsprechende Gestaltung der Form, beispielsweise durch Anordnung eines Systems von Zufuhrlöchern oder Kanälen, oder unter Einsatz einer porösen Zwischenschicht zwischen Form und Schaufelblatt, jene Umspülung des Schaufelblattendes mit Schutzgas erreichen, welche empfindliche Schaufelwerkstoffe gegen das Einwirken der Gase aus der Atmosphäre abzuschirmen vermag. Eine ähnliche Wirkung wie oben erzielt kann erreicht werden, indem die Form stirnseitig, d.h. schweissstellenseitig, um das Profil des Schaufelblattes, mit taschenförmigen Vertiefungen versehen wird.

Kurze Beschreibung der Zeichnung

Im folgenden werden anhand der Zeichnung Ausführungsbeispiele der Erfindung erläutert.
Es zeigt:
Fig. 1    eine zweiteilige Form als Massnahme für das Verfahren zur Verlängerung des Schaufelblattes von Strömungsmaschinenschaufeln durch Auftragsschweissen,
Fig. 2    eine weitere Form mit taschenförmigen Vertiefungen und
Fig. 3    eine andere Form, bei welcher die Vertiefung durch Tiefersetzung des Schaufelblattendes erreicht wird.

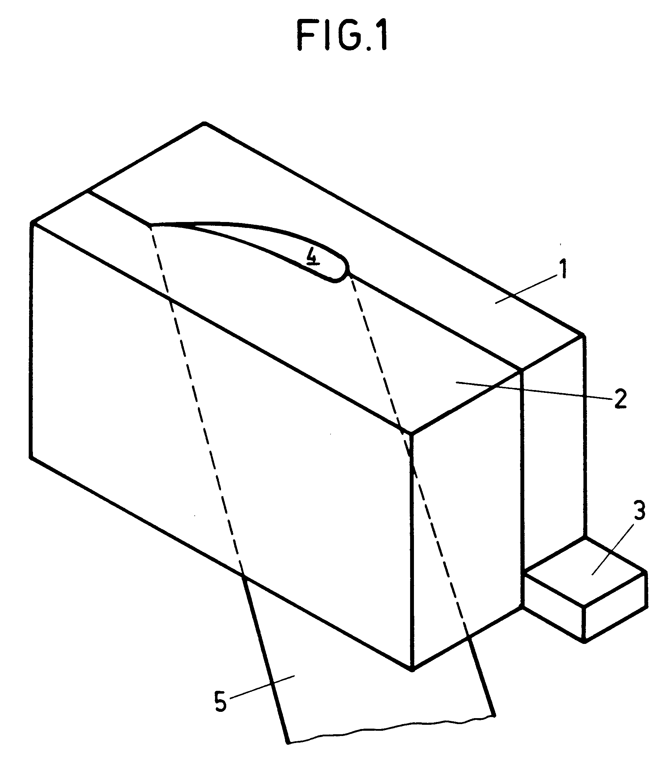

Wie aus Fig. 1 hervorgeht, besteht die Form, die als integrierende Massnahme für das Verfahren zur Verlängerung des Schaufelblattes von Strömungsmaschinenschaufeln durch Auftragsschweissen mit zum Einsatz gelangt, aus zwei zusammensetzbaren Teilen 1, 2. Formteil 1 trägt eine Konsole oder Anschluss 3, an welche der eine Pol des Schweissstromkreises anschliesst. Hierdurch sichert diese Vorkehrung einen kurzen Stromzufuhrweg, einen guten elektrischen Kontakt, womit eine Beschädigung der Schaufel durch unvorsichtiges Anbringen des Schweisskabels umgangen werden kann. Die Zusammensetzung und Fixierung der beiden Formteile 1, 2 gegeneinander geschieht unter Verwendung einer lösbaren Verbindung. Die Form 1, 2 weist im Innern eine durchgehende Oeffnung 4 von der Form des Profils des Schaufelblattes 5 auf. Das Material der Form ist vorzugsweise aus Kupfer. Ist beispielsweise das Verlängern eines Schaufelblattes einer Gasturbinenlaufschaufel aus dem Werkstoff IN 738 LC anzugehen, so wird mit dem WIG-Verfahren geschweisst, wobei als Schweissparameter 60 - 80 A, 5 - 7 Volt, Schutzgas Argon 6 - 10 l/min festzulegen sind.

Dabei werden auf die Stirnfläche des Schaufelblattes 5 eine bis drei Raupen aufgetragen. Der Zusatzdraht ist vorzugsweise 1,2 mm dick und besteht aus einer geeigneten Nickellegierung, z.B. IN 625 oder IN 617.

Es ist selbstverständlich, dass auch mehr als drei Raupen aufgeschweisst werden können. Ist der Luftspalt indessen gross, so soll zur besseren Stabilität des aufgeschweissten Materials die ganze Stirnseite des Schaufelblattes aufgetragen werden.

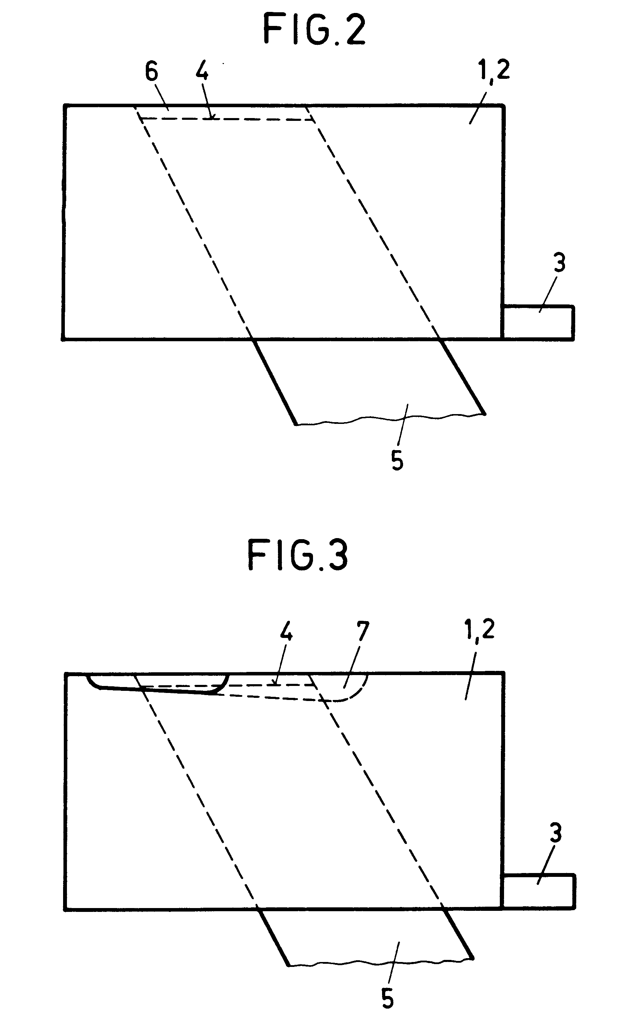

Fig. 2 zeigt eine Vorkehrung, wie die Verbesserung des Gasschutzes im Bereich des Schaufelblattendes 4 erzielt werden kann. Dadurch, dass die Oberkante der Form 1, 2 das Schaufelblattende 4 überragt, entsteht dort eine Vertiefung 6. Der Schutz ist hier darin zu sehen, dass eine Abschirmung gegen das Einwirken der Gase aus der Atmosphäre damit entsteht. Eine solche Vorkehrung eignet sich offensichtlich nur dort, wo nur eine minimale Verlängerung des Schaufelblattes verlangt ist.

Fig. 3 zeigt hingegen eine Möglichkeit, wie der Schutz gegen das Einwirken der Gase aus der Atmosphäre nachhaltiger ausgestaltet werden kann. Rund um das Profil des Schaufelblattes 5 werden Schutztaschen 7 ausgenommen. Durch Konvektion während des Schweissvorganges wird die Luft aus diesem Bereich weggedrängt. Danebst besteht hier eine grössere Arbeitsfreiheit bei den Auftragsschweissungen. Dies eignet sich auch für Auftragsschweissungen bei denen das gesamte Profil erneuert werden muss. Die Kontur der Tasche ist dann entsprechend breiter als das Profil.

Alle Beispiele zeigen nicht, wie die Form 1, 2 durch Erwärmungsund/oder Abkühlungsdispositive ergänzt werden kann. Eine Erwärmung kann beispielsweise durch Induktion vonstatten gehen; eine Abkühlung durch Rezirkulation eines Mediums. Wie wichtig eine Erwärmung der Schweisspartie ist zeigt sich am Beispiel einer Verdichterlaufschaufel aus 12 %-gem Chromstahl. Hier muss die Form bis auf 300 °C erwärmt werden, will man beim Schweissen eine Beschädigung des Schaufelblattes, z.B. durch Rissbildung vermeiden. Demgegenüber muss beispielsweise bei einer Nickellegierung eine Abkühlung vorgesehen werden.

Ebenfalls nicht gezeigt wird die Zuführung von Schutzgas in die Schweisspartie der Schaufel durch eine Anordnung eines Systems von Zufuhrlöchern oder Kanälen. Möglich ist auch, eine poröse Zwischenschicht zwischen Form 1, 2 und Schaufelblatt 5 vorzusehen. Damit wird das Schweissen unter Schutzgas vollauf ermöglicht.

## Patentansprüche

1. Verfahren zur Verlängerung des Schaufelblattes von Strömungsmaschinenschienenschaufeln im eingebauten Zustand durch ein Auftragschweissen, unter Zuhilfenahme einer dem Profil des Schaufelblattes angepassten Form, dadurch gekennzeichnet, dass die Form (1, 2) um ein Einwirken von Gasen aus der Atmosphäre zu minimieren dergestalt ausgebildet ist, dass schweisseitig um das Profil des Schaufelblattes (5) Schutztaschen (7) ausgenommen sind, und die Form (1, 2) dergestalt an das Schaufelblatt (5) angeschlagen wird, dass zwischen Oberkante der Form (1, 2) und Schaufelblattende (4) eine Vertiefung (6) entsteht.

2. Verfahren nach Anspruch 1, dadurch gekennzeichnet, dass das Auftragschweissen unter Beizug eines inerten Gases vorgenommen wird, das mittels Kanäle zur Schweissstelle geleitet wird.

3. Verfahren nach Anspruch 1, dadurch gekennzeichnet, dass die Form (1, 2) zweiteilig ausgeführt ist, wobei der eine Pol (3) des Schweissstromkreises direkt an der Form (1, 2) angebracht ist.

4. Verfahren nach Anspruch 1, dadurch gekennzeichnet, dass die Form (1, 2) mittels weiterer Anschlüsse erwähmt oder gekühlt wird.

## Claims

1. Method for lengthening the blade aerofoil of turbo machine blades in the assembly condition by building up with weld metal, with the aid of a mould adapted to the profile of the blade aerofoil, characterised in that the mould (1, 2), so as to minimise the effect of gases from the atmosphere, is designed in such a way that on the welding side around the profile of the blade aerofoil (5) protective pockets (7) are taken out and the mould (1, 2) is attached to the blade aerofoil (5) in such a way that a depression (6) occurs between the upper edge of the mould (1, 2) and the end of the blade aerofoil (4).

2. Method according to Claim 1, characterised in that the weld is built up with the employment of an inert gas which is supplied to the welding point by means of ducts.

**3.** Method according to Claim 1, characterised in that the mould (1, 2)) is designed in two parts, one pole (3) of the welding circuit being directly attached to the mould (1, 2).

**4.** Method according to claim 1, characterised in that the mould (1, 2) is heated or cooled by means of further connections.

**Revendications**

**1.** Procédé pour prolonger la pale d'aubes de turbomachines, à l'état monté, par soudage par rechargement, avec l'aide d'un moule adapté au profil de la pale, caractérisé en ce que, pour minimiser l'influence de gaz provenant de l'atmosphère, le moule (1, 2) est constitué de telle sorte que des poches de protection (7) sont creusées autour du profil de la pale (5) du côté du soudage et en ce que le moule (1, 2) est posé sur la paie (5) de telle façon qu'il existe une dénivellation (6) entre l'arête supérieure du moule (1, 2) et le bout (4) de la pale.

**2.** Procédé suivant la revendication 1, caractérisé en ce que le soudage par rechargement est opéré avec l'appoint d'un gaz inerte, qui est conduit au moyen de canaux jusqu'à l'endroit du soudage.

**3.** Procédé suivant la revendication 1, caractérisé en ce que le moule (1, 2) est réalisé en deux parties, une première borne (3) du circuit du courant de soudage étant relié directement au mouie (1, 2).

**4.** Procédé suivant la revendication 1, caractérisé en ce que le moule (1, 2) est échauffé ou refroidi au moyen de raccords additionnels.

# FIG.1

# FIG.2

# FIG.3